(19) Europäisches Patentamt
European Patent Office
Office européen des brevets

(11) **EP 4 654 429 A1**

(12) **EUROPEAN PATENT APPLICATION**

(43) Date of publication:
**26.11.2025 Bulletin 2025/48**

(21) Application number: 25172127.0

(22) Date of filing: **24.04.2025**

(51) International Patent Classification (IPC):
**H02J 7/00** (2006.01)    **H01M 10/42** (2006.01)

(52) Cooperative Patent Classification (CPC):
**H02J 7/0016; H01M 2010/4271**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.05.2024 US 202418657207**

(71) Applicant: **STMicroelectronics International N.V.
1228 Plan-les-Ouates, Geneva (CH)**

(72) Inventors:
• **LA ROSA, Fabrizio**
**95030 SAN PIETRO CLARENZA (IT)**
• **RAUCEA, Antonino**
**95030 MASCALUCIA (IT)**

(74) Representative: **Cabinet Beaumont
4, Place Robert Schuman
B.P. 1529
38025 Grenoble Cedex 1 (FR)**

(54) **A BATTERY MANAGEMENT SYSTEM AND METHOD FOR PERFORMING PASSIVE BALANCING OF BATTERY CELLS IN A SERIES-CONNECTED BATTERY PACK**

(57)    Example battery management systems, methods, and computer program products for managing the passive charge balancing of a battery pack (110) comprising a plurality of battery cells (102a-d) in series are provided. A first example battery management system (440) includes a battery pack (110), a battery management integrated circuit (444), and a battery management controller (442). The battery management integrated circuit (444) includes a discharge circuit (446a-d) for each battery cell (102a-d), having a shared balancing resistor (662a-c) connected to an adjacent battery cell (102a-d). The battery management controller (442) electrically coupled to the battery management integrated circuit (444), and configured to identify a least charged battery cell among the plurality of battery cells (102a-d); iteratively select a plurality of highest charged battery cells among the plurality of battery cells (102a-d), wherein no two highest charged battery cells are adjacent, and wherein each highest charged battery cell of the plurality of highest charged battery cells is greater than the least charged battery cell plus an unbalance threshold; and enable the discharge enable switch (664a-d) associated with each highest charged battery cell.

FIG. 6

**EP 4 654 429 A1**

**Description**

**TECHNOLOGICAL FIELD**

Embodiments of the present disclosure relate generally to passive charge balancing of battery cells, and more particularly, to simultaneously performing efficient passive charge balancing of a plurality of battery cells in a series-connected battery pack.

BACKGROUND

Batteries undergo a chemical reaction within battery cells to supply power to various devices. Devices requiring additional power, contain multiple battery cells, often connected in series, in a battery pack. Each battery cell in a battery pack exhibits unique characteristics, such as the internal resistance of the battery cell, the capacitance of a battery cell, the operating temperature of the battery cell, the aging characteristics of the battery cell, and so on. Unique characteristics of a battery cell may affect the rate at which a battery cell charges and discharges. Varying charge and discharge rates between the battery cells of a battery pack may lead to an unbalanced condition within the battery pack, negatively effecting the lifetime and utilization of a battery pack.

Applicant has identified many technical challenges and difficulties associated with efficiently performing passive balancing of a plurality of battery cells. Through applied effort, ingenuity, and innovation, Applicant has solved problems related to the balancing of multiple battery cells simultaneously by developing solutions embodied in the present disclosure, which are described in detail below.

BRIEF SUMMARY

Various embodiments are directed to example battery management systems, methods, and computer program products for managing the passive charge balancing of a battery pack. A first example battery management system is provided. The example battery management system includes a battery pack, a battery management integrated circuit, and a battery management controller. The battery pack comprising a plurality of battery cells electrically connected in series, each battery cell of the plurality of battery cells exhibiting a battery cell charge. The battery management integrated circuit comprising a discharge circuit for each battery cell, the discharge circuit comprising a discharge enable switch and a shared balancing resistor, wherein the shared balancing resistor is electrically connected to an adjacent battery cell. The battery management controller electrically coupled to the battery management integrated circuit, comprising one or more processors and one or more storage devices storing instructions that are operable when executed by the one or more processors to: identify a least charged battery cell of the plurality of battery cells, wherein the least charged battery cell exhibits the lowest battery cell charge of the plurality of battery cells; iteratively select a plurality of highest charged battery cells, wherein no two highest charged battery cells of the plurality of highest charged battery cells are adjacent, and wherein each highest charged battery cell of the plurality of highest charged battery cells is greater than the least charged battery cell plus an unbalance threshold; and enable the discharge enable switch associated with each highest charged battery cell in the plurality of highest charged battery cells.

In some embodiments, the discharge enable switch associated with each highest charged battery cell in the plurality of highest charged battery cells is enabled until at least one of the plurality of highest charged battery cells is balanced with the least charged battery cell.

In some embodiments, a battery cell of the plurality of battery cells is balanced in an instance in which a battery cell value of the battery cell is within the unbalance threshold of the least charged battery cell.

In some embodiments, the discharge enable switch is a field-effect transistor, wherein the battery management controller modifies a gate voltage at a gate of the field-effect transistor to discharge an associated battery cell.

In some embodiments, the battery management controller is configured to monitor one or more electrical properties of each battery cell of the plurality of battery cells.

In some embodiments, the one or more electrical properties include at least one of a voltage of a battery cell, a charge of the battery cell, an amperage of the battery cell, an ampere hours remaining of the battery cell, and energy remaining in the battery cell.

In some embodiments, the one or more electrical properties are determined by a pair of electrical connecting pins on the battery management integrated circuit.

In some embodiments, a first electrical connecting pin of the pair of electrical connecting pins is electrically connected to an anode of the battery cell and a second electrical connecting pin of the pair of electrical connecting pins is electrically connected to a cathode of the battery cell.

In some embodiments, the discharge circuit for each battery cell comprises a first balancing resistor, the discharge enable switch, and a second balancing resistor electrically connected in series with the battery cell, wherein the shared balancing resistor comprises at least one of the first balancing resistor and the second balancing resistor.

In some embodiments, the battery management controller is further configured to: generate a balance activation map comprising a balance activation entry for each battery cell in the plurality of battery cells, wherein the balance activation entry comprises: a battery cell identifier, identifying an associated battery cell; a battery cell value indicating the battery cell charge of the associated battery cell; and an enable indicator, indicating the associated battery cell will be discharged.

An example method for passive charge balancing a battery pack is further provided. The example method comprises a plurality of series-connected battery cells each exhibiting a battery cell charge, the method comprising: identifying, by a battery management controller electrically coupled to a battery management integrated circuit, a least charged battery cell of the plurality of battery cells, wherein the least charged battery cell exhibits a lowest battery cell charge of the plurality of battery cells; iteratively selecting a plurality of highest charged battery cells, wherein no two highest charged battery cells of the plurality of highest charged battery cells are adjacent, and wherein each highest charged battery cell of the plurality of highest charged battery cells is greater than the least charged battery cell plus an unbalance threshold; and enabling a discharge enable switch associated with each highest charged battery cell in the plurality of highest charged battery cells, wherein each battery cell is electrically coupled to a discharge circuit, the discharge circuit comprising: a discharge enable switch and a shared balancing resistor, wherein the shared balancing resistor is electrically connected to an adjacent battery cell.

In some embodiments, the method may further comprise enabling the discharge enable switch associated with each highest charged battery cell in the plurality of highest charged battery cells until each highest charged battery cell is balanced with the least charged battery cell.

In some embodiments, a battery cell is balanced in an instance in which the battery cell charge of the battery cell is within the unbalance threshold of the least charged battery cell.

In some embodiments, the discharge enable switch is a field-effect transistor, and enabling the discharge enable switch further comprises: modifying a gate voltage at a gate of the field-effect transistor to discharge an associated battery cell.

In some embodiments, the method further comprises monitoring one or more electrical properties of each battery cell of the plurality of battery cells, by a pair of electrical connecting pins on the battery management integrated circuit, wherein a first electrical connecting pin of the pair of electrical connecting pins is electrically connected to an anode of a battery cell and a second electrical connecting pin of the pair of electrical connecting pins is electrically connected to a cathode of the battery cell.

In some embodiments, the one or more electrical properties includes at least one of a voltage of a battery cell, the battery cell charge, an amperage of the battery cell, an ampere hours remaining of the battery cell, and energy remaining in the battery cell.

In some embodiments, the discharge circuit for each battery cell comprises a first balancing resistor, the discharge enable switch, and a second balancing resistor electrically connected in series with the battery cell, wherein the shared balancing resistor comprises at least one of the first balancing resistor and the second balancing resistor.

In some embodiments, the method further comprises generating a balance activation map comprising a balance activation entry for each battery cell in the plurality of battery cells, wherein the balance activation entry comprises: a battery cell identifier, identifying an associated battery cell; a battery cell value indicating the battery cell charge of the associated battery cell; and an enable indicator, indicating the associated battery cell will be discharged.

An example computer program product for passive charge balancing a battery pack comprising a plurality of battery cells electrically connected in series is further provided. In some embodiments, the example computer program product comprises at least one non-transitory computer-readable storage medium having computer-readable program code portions stored therein, the computer-readable program code portions comprising an executable portion configured to: identify, by a battery management controller electrically coupled to a battery management integrated circuit, a least charged battery cell of the plurality of battery cells, wherein the least charged battery cell exhibits a lowest battery cell charge of the plurality of battery cells; iteratively select a plurality of highest charged battery cells, wherein no two highest charged battery cells of the plurality of highest charged battery cells are adjacent, and wherein each highest charged battery cell of the plurality of highest charged battery cells is greater than the least charged battery cell plus an unbalance threshold; and enable a discharge enable switch associated with each highest charged battery cell in the plurality of highest charged battery cells, wherein each battery cell is electrically coupled to a discharge circuit, and each discharge circuit comprises: the discharge enable switch and a shared balancing resistor, wherein the shared balancing resistor is electrically connected to an adjacent battery cell.

A second example battery management system is further provided. The second example battery management system comprises a battery pack, a battery management integrated circuit, and a battery management controller. The battery pack comprising a plurality of battery cells electrically connected in series, each battery cell exhibiting a battery cell charge. The battery management integrated circuit comprising: a discharge circuit for each battery cell, each discharge circuit comprising: a discharge enable switch and a shared balancing resistor, wherein the shared balancing resistor is electrically connected to an adjacent battery cell. The battery management controller electrically coupled to the battery management integrated circuit, comprising one or more processors and one or more storage devices storing instructions that are operable when executed by the one or more processors to: receive an optimization parameter; determine an optimization value for each battery cell in the plurality of battery cells based on the optimization parameter; identify a least charged battery cell of the plurality of battery cells, wherein the least charged battery cell exhibits the lowest battery cell charge of the plurality of battery cells; select a plurality of unbalanced battery cells from the plurality of battery cells based on the optimization parameter and the optimization value for each of the plurality of battery cells, wherein the plurality of unbalanced battery cells does not comprise the least charged battery cell, wherein no two unbalanced battery cells of the plurality of unbalanced battery cells are adjacent, and wherein the battery cell charge of each unbalanced battery cell of the plurality of unbalanced battery cells is greater that the least charged battery cell plus an unbalance threshold; and enable the discharge enable switch associated with each unbalanced battery cell in the plurality of unbalanced battery cells.

In some embodiments, the optimization value represents a quantification of the unbalanced battery cell in relation to the optimization parameter.

In some embodiments, the battery management controller is further configured to: generate a valid combination set, wherein the valid combination set comprises all possible combinations of unbalanced battery cells selected for discharge.

In some embodiments, the battery management controller is further configured to: select a combination from the valid combination set based on the optimization values associated with each unbalanced battery cell in the combination.

In some embodiments, the optimization parameter indicates selection of the plurality of unbalanced battery cells from the plurality of battery cells is optimized to reduce time.

In some embodiments, the plurality of unbalanced battery cells are selected to minimize a number of balancing iterations.

In some embodiments, the plurality of unbalanced battery cells are selected to maximize a number of unbalanced battery cells comprising the plurality of unbalanced battery cells.

An embodiment provides a battery management system comprising:

- a battery pack comprising a plurality of battery cells electrically connected in series, each battery cell exhibiting a battery cell charge;
- a battery management integrated circuit comprising:

  - a discharge circuit for each battery cell, the discharge circuit comprising: a discharge enable switch and a shared balancing resistor, wherein the shared balancing resistor is electrically connected to an adjacent battery cell; and
  - a battery management controller electrically coupled to the battery management integrated circuit, comprising one or more processors and one or more storage devices storing instructions that are operable when executed by the one or more processors to:

- identify a least charged battery cell of the plurality of battery cells, wherein the least charged battery cell exhibits the lowest battery cell charge of the plurality of battery cells.

According to an embodiment, said one or more processors and one or more storage devices storing instructions that are operable when executed by the one or more processors to:

- iteratively select a plurality of highest charged battery cells,

  - wherein no two highest charged battery cells of the plurality of highest charged battery cells are adjacent, and
  - wherein each highest charged battery cell of the plurality of highest charged battery cells is greater than the least charged battery cell plus an unbalance threshold; and

- enable the discharge enable switch associated with each highest charged battery cell in the plurality of highest charged battery cells.

According to an embodiment:
said one or more processors and one or more storage devices storing instructions that are operable when executed by the one or more processors to:

- receive an optimization parameter;
- determine an optimization value for each battery cell in the plurality of battery cells based on the optimization parameter;
- identify a least charged battery cell of the plurality of battery cells, wherein the least charged battery cell exhibits the lowest battery cell charge of the plurality of battery cells;
- select a plurality of unbalanced battery cells from the plurality of battery cells based on the optimization parameter and the optimization value for each of the plurality of battery cells,
- wherein the plurality of unbalanced battery cells does not comprise the least charged battery cell,
- wherein no two unbalanced battery cells of the plurality of unbalanced battery cells are adjacent, and
- wherein the battery cell charge of each unbalanced battery cell of the plurality of unbalanced battery cells is greater that the least charged battery cell plus an unbalance threshold; and
- enable the discharge enable switch associated with each unbalanced battery cell in the plurality of unbalanced battery cells.

Another embodiment provides a method for passive charge balancing a battery pack comprising a plurality of series-connected battery cells each exhibiting a battery cell charge, the method comprising:

- identifying, by a battery management controller electrically coupled to a battery management integrated circuit, a least charged battery cell of the plurality of battery cells, wherein the least charged battery cell exhibits a lowest battery cell charge of the plurality of battery cells;
- iteratively selecting a plurality of highest charged battery cells,

  - wherein no two highest charged battery cells of the plurality of highest charged battery cells are adjacent, and
  - wherein each highest charged battery cell of the plurality of highest charged battery cells is greater than the least charged battery cell plus an unbalance threshold; and

- enabling a discharge enable switch associated with each highest charged battery cell in the plurality of highest charged battery cells, wherein each battery cell is electrically coupled to a discharge circuit, the discharge circuit comprising:

  - a discharge enable switch and a shared balancing resistor,
  - wherein the shared balancing resistor is electrically connected to an adjacent battery cell.

Another embodiment provides a computer program product for passive charge balancing a battery pack comprising a plurality of battery cells electrically connected in series, the computer program product comprising at least one non-transitory computer-readable storage medium having computer-readable program code portions stored therein, the computer-readable program code portions comprising an executable portion configured to:

- identify, by a battery management controller electrically coupled to a battery management integrated circuit, a least charged battery cell of the plurality of battery cells, wherein the least charged battery cell exhibits a lowest battery cell charge of the plurality of battery cells;
- iteratively select a plurality of highest charged battery cells,

  - wherein no two highest charged battery cells of the plurality of highest charged battery cells are adjacent, and
  - wherein each highest charged battery cell of the plurality of highest charged battery cells is greater than the least charged battery cell plus an unbalance threshold; and

- enable a discharge enable switch associated with each highest charged battery cell in the plurality of highest charged battery cells,

  - wherein each battery cell is electrically coupled to a discharge circuit, and each discharge circuit comprises:
  - the discharge enable switch and a shared balancing resistor, wherein the shared balancing resistor is electrically connected to an adjacent battery cell.

According to an embodiment, the discharge enable switch associated with each highest charged battery cell in the plurality of highest charged battery cells is enabled until at least one of the plurality of highest charged battery cells is balanced with the least charged battery cell.

According to an embodiment, the method or the computer program product comprises:

- enabling the discharge enable switch associated with each highest charged battery cell in the plurality of highest charged battery cells until each highest charged battery cell is balanced with the least charged battery cell.

According to an embodiment, a battery cell of the plurality of battery cells is balanced in an instance in which a battery cell value or a battery cell charge of the battery cell is within the unbalance threshold of the least charged battery cell.

The battery management system of any of claims 2, 6 and 8, or the method of any of claims 4, 7 and 8, or the computer program product of any of claims 5, 7 and 8, wherein the discharge enable switch is a field-effect transistor, and enabling the discharge enable switch further comprises:

- modifying a gate voltage at a gate of the field-effect transistor to discharge an associated battery cell.

According to an embodiment, the battery management controller is configured to monitor one or more electrical properties of each battery cell of the plurality of battery cells, and/or

wherein the one or more electrical properties are determined by a pair of electrical connecting pins on the battery management integrated circuit, and/or wherein a first electrical connecting pin of the pair of electrical connecting pins is electrically connected to an anode of the battery cell and a second electrical connecting pin of the pair of electrical connecting pins is electrically connected to a cathode of the battery cell.

According to an embodiment, the one or more electrical properties includes at least one of a voltage of a battery cell, a charge of the battery cell, an amperage of the battery cell, an ampere hours remaining of the battery cell, and energy remaining in the battery cell.

According to an embodiment, the discharge circuit for each battery cell comprises a first balancing resistor, the discharge enable switch, and a second balancing resistor electrically connected in series with the battery cell, wherein the shared balancing resistor comprises at least one of the first balancing resistor and the second balancing resistor.

According to an embodiment, the system, the method or the computer program product comprises:

- generate a balance activation map comprising a balance activation entry for each battery cell in the plurality of battery cells,
- wherein the balance activation entry comprises:

  - a battery cell identifier, identifying an associated battery cell;
  - a battery cell value indicating the battery cell charge of the associated battery cell; and
  - an enable indicator, indicating the associated battery cell will be discharged.

According to an embodiment, the optimization value represents a quantification of the unbalanced battery cell in relation to the optimization parameter.

According to an embodiment, the battery management controller is further configured to:

- generate a valid combination set, wherein the valid combination set comprises all possible combinations of unbalanced battery cells selected for discharge, and/or
- select a combination from the valid combination set based on the optimization values associated with each unbalanced battery cell in the combination.

According to an embodiment, the optimization parameter indicates selection of the plurality of unbalanced battery cells from the plurality of battery cells is optimized to reduce time.

According to an embodiment, the plurality of unbalanced battery cells are selected to minimize a number of balancing iterations, or to maximize a number of unbalanced battery cells comprising the plurality of unbalanced battery cells.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an example battery pack comprising a plurality of battery cells in accordance with an example embodiment of the present disclosure.
FIG. 2 illustrates an unbalanced battery pack during charging and discharging in accordance with an example embodiment of the present disclosure.
FIG. 3 illustrates an example battery pack balancing process in accordance with an example embodiment of the present disclosure.
FIG. 4 illustrates a block diagram of an example battery management system in accordance with an example embodiment of the present disclosure.
FIG. 5 illustrates a block diagram of an example architecture of a battery management controller in accordance with an example embodiment of the present disclosure.
FIG. 6 illustrates an example embodiment of a battery management system in accordance with an example embodiment of the present disclosure.
FIG. 7 illustrates an example process for balancing a plurality of battery cells in a battery pack in accordance with an example embodiment of the present disclosure.
FIG. 8 depicts an example embodiment of an example process for balancing a plurality of battery cells in a battery pack in accordance with an example embodiment of the present disclosure.
FIG. 9 depicts an example balance activation map in accordance with an example embodiment of the present disclosure.
FIG. 10 illustrates example battery cell charges in a plurality of battery cells in accordance with an example embodiment of the present disclosure.
FIG. 11 illustrates an example process for balancing a plurality of battery cells in a battery pack in accordance with an example embodiment of the present disclosure.
FIG. 12 depicts an additional example embodiment of an example process for balancing a plurality of battery cells in a battery pack in accordance with an example embodiment of the present disclosure.
FIG. 13 illustrates example battery cell charges in a plurality of battery cells in accordance with an example embodiment of the present disclosure.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with passively balancing a plurality of battery cells in a battery pack. As understood by those of skill in the field to which the present disclosure pertains, there are numerous example scenarios in which a user may desire to passively balance the battery cells in a battery pack.

In general, batteries (e.g., lithium-ion batteries, lithium-polymer batteries, nickelcadmium batteries, etc.) may undergo a chemical reaction within a battery cell to supply power to various devices. Devices requiring additional power, may contain multiple battery cells, often connected in series, in a battery pack. A battery pack is generally subjected to continuous reuse, including repeated charging and discharging of the battery cells within the battery pack. Each battery cell in a battery pack exhibits unique characteristics. Certain characteristics of a battery cell, such as the internal resistance of the battery cell, the capacity of the battery cell, the operating temperature of the battery cell, the aging characteristics of the battery cell, and so on, may affect the rate at which a battery cell charges and discharges.

Varying charge and discharge rates between the battery cells of a battery pack may lead to an unbalanced condition within the battery pack. An unbalanced condition occurs when the battery cell charge (e.g., energy or capacity of the battery cell) of the battery cells constituting a battery pack varies from cell to cell. During cell imbalance, the battery cells of a battery pack generally have variable capacities and are at different state-of-charge levels. In the absence of any cell balancing or without redistribution, a number of problems may occur. For example, during discharging, the battery pack will stop providing power when the battery cell with the lowest capacity (e.g., least charged battery cell) is empty. Thus, a battery cell with a lower capacity will decrease the battery life of the entire battery pack. In addition, during charging, a battery cell with the highest battery cell charge (e.g., highest charged battery cell) will reach a full charge earlier than a battery cell with a lower battery cell charge. When the highest charged battery cell reaches a full charge a battery gauge will trigger, stopping the charge of the battery pack. Thus, the lower charged battery cells never reach a full charge. Such situations are undesirable as they lead to the underutilization of the total potential of the battery pack.

In order to restore balance to a battery pack, a battery management system may implement a cell balancing procedure. A battery pack including several cells connected in series is considered balanced when all the battery cells have the same battery cell charge, within a threshold (e.g., unbalance threshold). Cell balancing improves the overall performance and longevity of a battery pack. Cell balancing procedures may comprise active cell balancing or passive cell balancing. Active cell balancing redistributes the stored energy between the battery cells. For example, energy is drained from the battery cells with higher battery cell charges and used to charge the battery cells with lower battery cell charges. Active cell balancing fully utilizes the available energy in a battery pack. However, active cell balancing requires additional circuitry, such as charge storing components like capacitors and inductors, and/or dedicated DC-DC converters to transfer energy amongst battery cells. The additional circuitry may be bulky and expensive.

Passive cell balancing involves reducing the battery cell charge in high energy battery cells of the battery pack. The energy in all battery cells may be reduced to the level of the least charged battery cell. By reducing the battery cell charge to the level of the least charged battery cell, the battery cells of the battery pack are set to a balanced state. In general, the battery cell charge of a high energy battery cell may be reduced by exposing the battery cell to a load, such as a balancing resistor. By enabling current to run from the battery cell and through a balancing resistor the excess battery cell charge of a highly charged battery cell may be reduced.

In some examples, each battery cell of a battery pack may be connected to a dedicated load circuit. A dedicated load circuit may enable a user to selectively drain energy from the battery cells individually. Individually draining the battery cells may be time consuming and inefficient. In addition, a dedicated load circuit architecture may require additional circuitry, for example, a dedicated load circuit for each battery cell in the battery pack, as well as dedicated pins and electronic components to measure the voltage, charge, and/or amperage of the battery cell. The additional circuitry may be especially problematic in battery packs utilized within limited space requirements and/or on low-cost products.

The various example embodiments described herein utilize various techniques to efficiently perform passive charge balancing on a plurality of battery cells in a battery pack. For example, a battery management system in accordance with the present disclosure may include a battery management controller and a battery management system integrated circuit (IC) electrically coupled to each cell of the battery pack. The battery management system IC may include a discharge circuit for each battery cell in the battery pack wherein each discharge circuit comprises at least a discharge enable switch and a shared balancing resistor. In addition, the battery management controller may be configured to selectively enable one or more discharge circuits associated with a battery cell by enabling the discharge enable switch corresponding to the battery cell.

The battery management controller may be configured to select battery cells for discharge in an efficient manner. The battery management system IC includes a discharge circuit for each battery cell and each discharge circuit includes at least one shared balancing resistor. A shared balancing resistor is electrically coupled to two adjacent battery cells in a battery pack. Implementing a battery management system IC with one or more shared balancing resistors reduces the circuitry and size of the battery management system IC. However, a shared balancing resistor affects certain limitations on the selection of battery cells for discharging. For example, two adjacent battery cells sharing a shared balancing resistor may not discharge simultaneously. Thus, a battery management controller may be configured to select battery cells for discharge according to one or more techniques providing for efficient charge balancing of the battery pack.

One example embodiment described herein utilizes a heuristic method of selecting one or more battery cells for discharge simultaneously. For example, the battery management controller may be configured to iteratively select a plurality of highest charged battery cells. The heuristic method may identify a least charged battery cell and a first highest charged battery cell, wherein the least charged battery cell is not selected for discharge, the first highest charged battery cell is selected for discharge, and the adjacent cells to the first highest charged battery cell are not selected for discharge. The selection of the remaining highest charged battery cell may continue until all battery cells are designated to be discharged or not to be discharged. Such a process may continue until the battery pack is balanced.

Another example embodiment described herein utilizes an optimization method to select a best combination of battery cells designated to be discharged or not to be discharged from all combinations of possible solutions, wherein the selection is made in order to optimize an optimization parameter. The optimization method employed by the battery management controller may operate according to programmed parameters, for example, the highest charged battery cell is identified and designated for discharge, while the least charged battery cell is identified and designated not to be discharged. In addition, no two adjacent battery cells may be selected for discharge. The optimization method performs selection of battery cells until the battery pack is balanced.

As a result of the herein described example embodiments and in some examples, the effectiveness of battery management system to perform passive charge balancing is greatly improved. Passive charge balancing performed according to the principles described herein may greatly improve the speed and efficiency with which a battery pack is balanced. Such improvements may increase the performance and life of a battery pack.

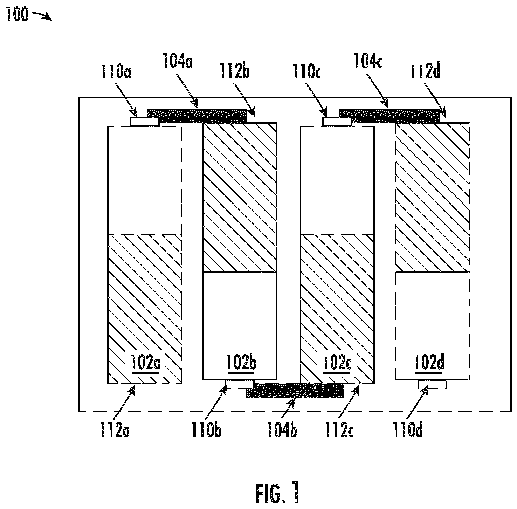

Referring now to FIG. 1, an example series-connected battery pack 100 is provided. As depicted in FIG. 1, the series-connected battery pack 100 includes a plurality of battery cells 102a-102f. Each battery cell 102a-102d comprises a cathode terminal 110a-110d and an anode terminal 112a-112d. Each battery cell 102a-102d is electrically coupled in series with an adjacent battery cell 102a-102d by a series connector 104a-104c electrically connecting the cathode terminal (e.g., cathode terminal 110a) of the battery cell 102a-102d to the anode terminal (e.g., anode terminal 112b) of an adjacent battery cell 102a-102d. Although depicted as comprising four battery cells 102a-102d, a battery pack 100 may comprises any plurality of battery cells 102a-102d, for example, tens, hundreds, or even thousands of battery cells 102a-102d.

As depicted in FIG. 1, the example series-connected battery pack includes a plurality of battery cells 102a-102d. A battery cell 102a-102d is any electrochemical device utilizing chemical reactions to generate electrical energy. Chemical reactions within a battery cell 102a-102d may involve transmitting ions between a positively charged electrode (e.g., cathode terminal 110a-110d) and a negatively charged electrode (e.g., anode terminal 112a-112d). When a battery cell 102a-102d provides power to a load, the flow of the electrons from the anode terminal 112a-112d to the cathode terminal 110a-110d generates electric current flowing from the cathode terminal 110a-110d to the anode terminal 112a-112d. A battery cell 102a-102d may contain any of a large variety of chemical compositions (e.g., lithium-nickel-manganese-cobalt oxides, lithium-iron phosphates, etc.). A battery cell 102a-102d may take any form, including but not limited to cylindrical cells, prismatic cells, pouch cells, etc.

A battery cell 102a-102d may exhibit a battery cell charge. The battery cell charge of a battery cell 102a-102d is any representation of the capacity of a particular battery cell 102a-102d to generate electrical energy. The battery cell charge of a battery cell 102a-102d may be determined by measuring the voltage of the battery cell 102a-102d and equating the measured voltage in terms of capacity, for example, by comparing the measured voltage to the voltage of the battery cell 102a-102d at full capacity and the voltage of the battery cell 102a-102d when fully discharged. The battery cell charge of a battery cell 102a-102d may be determined by measuring one or more electrical properties of the battery cell 102a-102d, for example, the voltage, the charge, the amperage, the ampere hours remaining, and/or the energy remaining in a battery cell 102a-102d.

As further depicted in FIG. 1, the example series-connected battery pack 100 includes a plurality of series connectors 104a-104c. A series connector 104a-104c is any conductive material configured to electrically couple the cathode terminal 110a-110d of one or more battery cells 102a-102d to the anode terminal 112a-112d of another battery cell 102a-102d in the battery pack 100. Electrically coupling a plurality of battery cells 102a-102d in series increases the available voltage that may be provided by the battery pack 100.

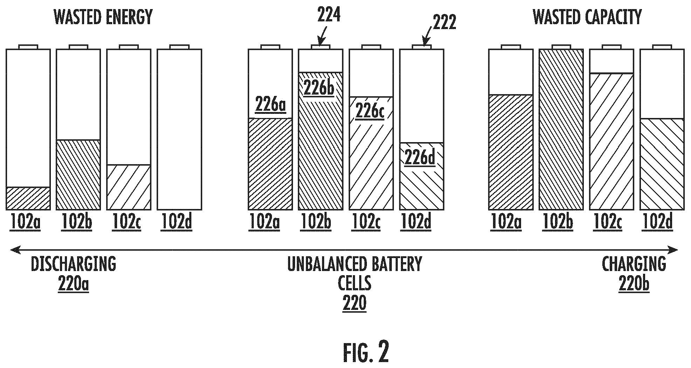

Referring now to FIG. 2, an unbalanced battery pack 220 comprising a plurality of battery cells 102a-102d, each exhibiting a battery cell charge 226a-226d are depicted in an unbalanced state when discharging 220a and charging 220b.

As depicted in FIG. 2, a battery pack 220 may comprise a plurality of battery cells 102a-102d each exhibiting a unique battery cell charge 226a-226d. As described in relation to FIG. 1, a battery cell charge 226a-226d is any representation of the capacity of a particular battery cell 102a-102d to generate electrical energy and may be determined by measuring one or more electrical properties of the battery cell 102a-102d, for example, the voltage, the charge, the amperage, the ampere hours remaining, and/or the energy remaining in a battery cell 102a-102d.

As depicted in FIG. 2, the battery pack 220 of unbalanced battery cells includes a least charged battery cell 222 and a highest charged battery cell 224. A least charged battery cell 222 includes one or more battery cells 102a-102d comprising the lowest battery cell charge 226a-226d in relation to the other battery cells 102a-102d comprising the battery pack 220. For example, the battery cell 102d depicted in FIG. 2 exhibits the lowest battery cell charge 226d of any of the battery cells 102a-102d and is thus the least charged battery cell 222. In contrast, a highest charged battery cell 224 includes one or more battery cells 102a-102d comprising the highest battery cell charge 226a-226d in relation to the other battery cells 102a-102d comprising the battery pack 220. The battery cell 102b depicted in FIG. 2 exhibits the highest battery cell charge 226d of any of the battery cells 102a-102d and is thus the highest charged battery cell 224.

As further depicted in FIG. 2, in an instance in which the battery pack is discharging 220a, the battery pack will stop providing power when the least charged battery cell 222 is fully discharged. Thus, the discharging battery pack may stop providing power even though there is still energy within the battery cells 102a-102c of the battery pack. The energy of an unbalanced battery pack, as shown in FIG. 2, may not be fully utilized.

Similarly, as depicted in FIG. 2, in an instance in which the battery pack is charging 220b, the battery pack will stop charging when the highest charged battery cell 224 is fully charged. Thus, the battery pack may stop charging even though the battery cells 102a, 102c, 102d are not fully charged. The available capacity of an unbalanced battery pack, as shown in FIG. 2, may not be fully utilized.

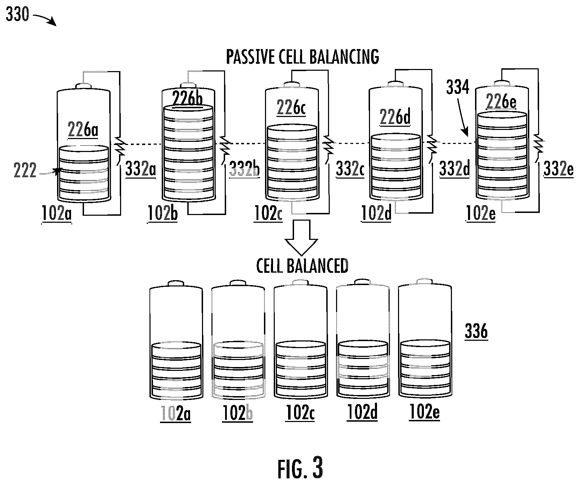

Referring now to FIG. 3, an example passive battery balancing process 330 is depicted. In general, a passive battery balancing process 330 includes identifying the least charged battery cell 222 based on the battery cell charge 226a-226e of each of the battery cells 102a-102f comprising the battery pack. A battery management system may utilize the battery cell charge 226a-226e of the least charged battery cell 222 to determine a battery cell charge lowest level 334 indicating a target battery cell charge 226a-226e for each of the battery cells 102a-102f in the battery pack.

As depicted in FIG. 3, each battery cell 102a-102e is electrically coupled to a balancing resistor 332a-332e to facilitate the discharge of excess energy in a battery cell 102a-102e above the battery cell charge lowest level 334. During a passive battery balancing process 330, the battery cells 102a-102e with a battery cell charge 226a-226e above the battery cell charge lowest level 334 (e.g., battery cell 102b-102e) are selected for discharge. To discharge a selected battery cell 102b-102e, current flow 338b-338e is enabled from the battery cell 102b-102d and through the balancing resistor 332b-332e. The current flow 338b-338e through the balancing resistor 332b-332e begins to discharge excess battery cell charge 226b-226e in the battery cell 102b-102e selected for discharge.

During a passive battery balancing process 330, the battery cells 102b-102e are allowed to discharge until the battery cell charge 226a-226e is within an unbalance threshold of the battery cell charge lowest level 334. An unbalance threshold is any data or value indicating the minimum deviation of a battery cell charge 226a-226e from the battery cell charge lowest level 334. In some embodiments, an unbalance threshold may be a fixed value (e.g., 1 millivolt). In some embodiments, an unbalance threshold may be relative to the battery cell charge lowest level 334 (e.g., $\pm5\%$). In an instance in which the difference in battery cell charge 226a-226e of one or more battery cells 102a-102e of a battery pack exceeds the unbalance threshold, the battery pack is considered unbalanced.

As further depicted in FIG. 3, a balanced battery pack 336 is obtained when the battery cell charge 226a-226e of each of the battery cells 102a-102b is within an unbalance threshold.

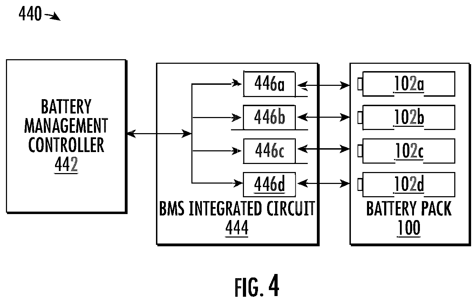

Referring now to FIG. 4, an example battery management system 440 is provided. As depicted in FIG. 4, the example battery management system 440 includes a battery management controller 442 electrically coupled to a battery management system IC 444. In addition, the battery management system IC 444 is electrically coupled to each battery cell 102a-102d comprising a battery pack 100. As further depicted in FIG. 4, the battery management system IC 444 includes a discharge circuit 446a-446d for each battery cell 102a-102d comprising the battery pack 100.

As depicted in FIG. 4, the battery management system 440 includes a battery management controller 442. A battery management controller 442 comprises one or more processors configured to receive input data related to the state of a battery pack 100 and cause actions to be taken based on the state of the battery pack 100. The battery management controller 442 may, for example, control charging of the battery pack, monitor and alert based on charge levels, monitor overcharging/undercharging of a battery pack 100, and perform other similar tasks in relation to the management and health of a battery pack 100.

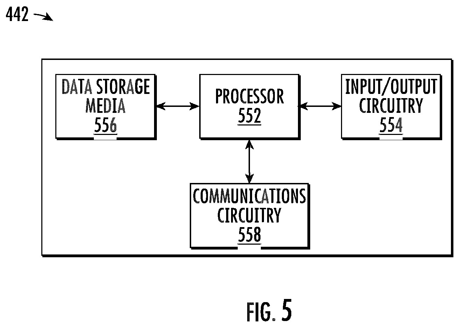

In addition, a battery management controller 442 may be configured to execute passive charge balancing based on the electrical properties of the battery cells 102a-102d of the battery pack 100. For example, as depicted in FIG. 4, the battery management controller 442 is electrically coupled to the battery management system IC 444. The battery management system IC 444 enables the battery management controller 442 to monitor the electrical properties related to the battery cell charge of each battery cell 102a-102d. In an instance in which a battery pack 100 becomes unbalanced (e.g., one or more battery cells 102a-102d deviate from the battery cell charge lowest level 334 above an unbalance threshold) the battery management controller 442 may select one or more battery cells 102a-102d for discharging. Further, to execute a discharge, the battery management controller 442 may enable the discharge circuit 446a-446d of the associated battery cell 102a-102d, allowing the discharge of excess energy in the battery cell 102a-102d, until the battery cell charge of the battery cell 102a-102d is within the unbalance threshold of the battery cell charge lowest level. An example architecture of a battery management system 440 is further described in relation to FIG. 5.

As further depicted in FIG. 4, the example battery management system 440 includes a battery management system IC 444. The battery management system IC 444 is any circuitry comprising hardware and/or software, configured to facilitate an interface between the battery management controller 442 and the battery cells 102a-102d of the battery pack 100. The battery management system IC 444 may provide one or more electrical connections enabling a battery management controller 442 to monitor the electrical properties of the battery cells 102a-102d comprising the battery pack 100. For example, the battery management system IC 444 may enable a battery management controller 442 to monitor the voltage, charge, amperage, ampere hours, energy, or other similar electrical properties of the battery cells 102a-102d.

The battery management system IC 444 further includes a discharge circuit 446a-446d for each battery cell 102a-102d of the battery pack 100. A discharge circuit 446a-446d is any combination of circuitry including hardware and/or software configured to discharge excess charge in the corresponding battery cell 102a-102d. A discharge circuit 446a-446d is further configured to include a discharge enable switch and a shared balancing resistor.

A discharge enable switch is any switching mechanism configured to enable the flow of current from the corresponding battery cell 102a-102d through one or more load electrical elements, including one or more shared balancing resistors. A discharge enable switch may be controlled by the battery management controller 442. Thus, in an instance in which the battery management controller 442 selects a battery cell 102a-102d for discharge, the battery management controller 442 may enable the discharge enable switch to execute the discharge of the selected battery cell 102a-102d. In some embodiments, the discharge enable switch may comprise a transistor device, such as a field-effect transistor (FET), metal-oxide-semiconductor FET (MOSFET), bi-polar junction transistor (BJT), or other similar switching device.

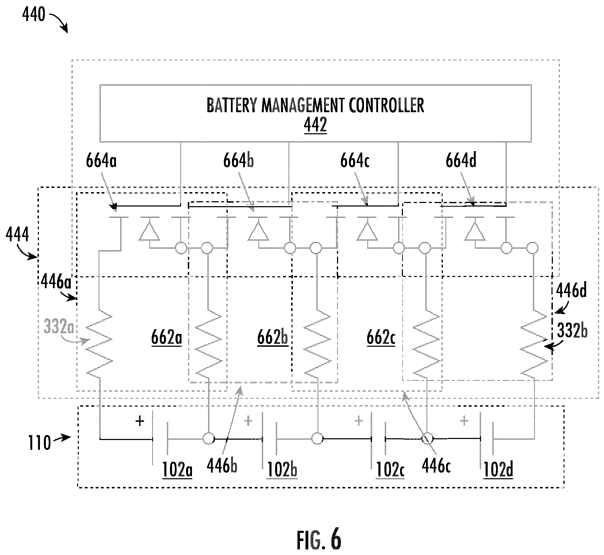

A shared balancing resistor comprises any resistive element electrically coupled to two adjacent battery cells 102a-102d and comprising at least a portion of the discharge circuits of each of the adjacent battery cells 102a-102d. In some embodiments, a battery management system IC 444 may share electrical components, and/or electrical connectors, such as electrical connecting pins, between one or more adjacent battery cells 102a-102d. Shared electrical components reduce the size and cost of a battery management system IC 444. Reduced size and cost may be especially important for products with strict size limitations and/or low-cost products. Sharing electrical components of a discharge circuit 446a-446d with adjacent battery cells 102a-102d may result in certain limitations of the passive balancing process. For example, sharing a shared balancing resistor between discharge circuits of adjacent battery cells 102a-102d may prevent a battery management controller 442 from selecting two adjacent cells for discharge simultaneously as the increased current in the electrical components may damage the electrical components. An example embodiment of a discharge circuit comprising a discharge enable switch and a shared balancing resistor is further described in relation to FIG. 6.

Referring now to FIG. 5, FIG. 5 illustrates a block diagram of an example apparatus that can be specially configured in accordance with at least one example embodiment of the present disclosure. Specifically, FIG. 5 illustrates a battery management controller 442 in accordance with at least one example embodiment of the present disclosure. The battery management controller 442 includes processor 552, data storage media 556, input/output circuitry 554, and communications circuitry 558. In some embodiments, the battery management controller 442 is configured, using one or more of the sets of circuitry 552, 556, 554, and/or 558, to execute and perform one or more of the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the battery management controller 442 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the battery management controller 442 provide or supplement the functionality of another particular set of circuitry. For example, the processor 552 in some embodiments provides processing functionality to any of the sets of circuitry, the data storage media 556 provides storage functionality to any of the sets of circuitry, the communications circuitry 558 provides network interface functionality to any of the sets of circuitry, and/or the like.

In some embodiments, the processor 552 (and/or co-processor or any other processing circuitry assisting or otherwise associated with the processor) is/are in communication with the data storage media 556 via a bus for passing information among components of the battery management controller 442. In some embodiments, for example, the data storage media 556 is non-transitory and may include, for example, one or more volatile and/or non-volatile memories. In other words, for example, the data storage media 556 in some embodiments includes or embodies an electronic storage device (e.g., a computer readable storage medium). In some embodiments, the data storage media 556 is configured to store information, data, content, applications, instructions, or the like, for enabling the battery management controller 442 to carry out various functions in accordance with example embodiments of the present disclosure.

The processor 552 can be embodied in a number of different ways. For example, in some example embodiments, the processor 552 includes one or more processing devices configured to perform independently. Additionally, or alternatively, in some embodiments, the processor 552 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the battery management controller 442, and/or one or more remote or "cloud" processor(s) external to the battery management controller 442.

In an example embodiment, the processor 552 is configured to execute instructions stored in the data storage media 556 or otherwise accessible to the processor. Alternatively, or additionally, the processor 552 in some embodiments is configured to execute hard-coded functionality. As such, whether configured by hardware or software methods, or by a combination thereof, the processor 552 represents an entity (e.g., physically embodied in circuitry) capable of performing operations according to an embodiment of the present disclosure while configured accordingly. Alternatively, or additionally, as another example in some example embodiments, when the processor 552 is embodied as an executor of software instructions, the instructions specifically configure the processor 552 to perform the algorithms embodied in the specific operations described herein when such instructions are executed. In some embodiments, the processor 552 includes or is embodied by a CPU, microprocessor, and/or the like that executes computer-coded instructions, for example stored via the non-transitory data storage media 556.

In some embodiments, the battery management controller 442 includes input/output circuitry 554 that provides output to the user and, in some embodiments, to receive an indication of a user input. In some embodiments, the input/output circuitry 554 is in communication with the processor 552 to provide such functionality. The input/output circuitry 554 may comprise one or more user interface(s) and in some embodiments includes a display that comprises the interface(s) rendered as an electronic interface, a web user interface, an application user interface, a user device, a backend system, or the like. In some embodiments, the input/output circuitry 554 also includes a keyboard, a mouse, a joystick, a touch screen, touch areas, soft keys a microphone, a speaker, or other input/output mechanisms. The processor 552 and/or input/output circuitry 554 comprising the processor can be configured to control one or more functions of one or more user interface elements through computer program instructions (e.g., software and/or firmware) stored on a memory accessible to the processor (e.g., data storage media 556, and/or the like). In some embodiments, the input/output circuitry 554 includes or utilizes a user-facing application to provide input/output functionality to a client device and/or other display associated with a user. In some embodiments, the input/output circuitry 554 includes hardware, software, firmware, and/or a combination thereof, that facilitates simultaneously display of particular data via a plurality of different devices.

In some embodiments, the battery management controller 442 includes communications circuitry 558. The communications circuitry 558 includes any means such as a device or circuitry embodied in either hardware or a combination of hardware and software that is configured to receive and/or transmit data from/to a network and/or any other device, circuitry, or module in communication with the battery management controller 442. In this regard, in some embodiments the communications circuitry 558 includes, for example, a network interface for enabling communications with a wired or wireless communications network. Additionally, or alternatively in some embodiments, the communications circuitry 558 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 558 includes circuitry for interacting with the antenna(s) and/or other hardware or software to cause transmission of signals via the antenna(s) or to handle receipt of signals received via the antenna(s). In some embodiments, the communications circuitry 558 enables transmission to and/or receipt of data from a client device, capture device, and/or other external computing device in communication with the battery management controller 442.

Additionally, or alternatively, in some embodiments, two or more of the sets of circuitries 552-558 are combinable. Alternatively, or additionally, in some embodiments, one or more of the sets of circuitry perform some or all of the functionality described associated with another component. For example, in some embodiments, two or more of the sets of circuitry 552-558 are combined into a single module embodied in hardware, software, firmware, and/or a combination thereof. Similarly, in some embodiments, one or more of the sets of circuitry, is/are combined with the processor 552, such that the processor 552 performs one or more of the operations described above with respect to each of these sets of circuitry 554-558.

Referring now to FIG. 6, an example battery management system 440 is provided. As depicted in FIG. 6, the example battery management system 440 includes a battery management controller 442 electrically coupled to the discharge enable switch 664a-664d of each discharge circuit 446a-446d comprising the battery management system IC 444. As further depicted in FIG. 6, each discharge circuit 446a-446d is electrically connected to a corresponding battery cell 102a-102d of an example battery pack 110. Further, each discharge circuit 446a-446d includes at least one shared balancing resistor 662a-662c, with each of the outermost discharge circuits 446a, 446d comprising a balancing resistor 332a, 332b.

As depicted in FIG. 6, the example battery management system 440 includes a discharge circuit 446a-446d for each battery cell 102a-102d of the battery pack. A discharge circuit 446a comprises a first resistor, a discharge enable switch 664a-664d, and a second resistor electrically connected in series. The first resistor is further electrically connected to a first terminal of a battery cell 102a-102d, and the second resistor is electrically connected to a second terminal of the battery cell 102a-102. For example, the discharge circuit 446a associated with the battery cell 102a comprises battery cell 102a, balancing resistor 332a, discharge enable switch 664a, and shared balancing resistor 662a electrically connected in series. Thus, in an instance in which the discharge enable switch 664a is enabled by the battery management controller 442, current flows through the discharge circuit 446a, discharging excess charge from the battery cell 102a.

The discharge circuit 446b associated with the battery cell 102b comprises battery cell 102b, shared balancing resistor 662a, discharge enable switch 664b, and shared balancing resistor 662b electrically connected in series. Thus, in an instance in which the discharge enable switch 664b is enabled by the battery management controller 442, current flows through the discharge circuit 446b, discharging excess charge from the battery cell 102b.

The discharge circuit 446c associated with the battery cell 102c comprises battery cell 102c, shared balancing resistor 662b, discharge enable switch 664c, and shared balancing resistor 662c electrically connected in series. Thus, in an instance in which the discharge enable switch 664c is enabled by the battery management controller 442, current flows through the discharge circuit 446c, discharging excess charge from the battery cell 102c.

The discharge circuit 446d associated with the battery cell 102d comprises battery cell 102d, shared balancing resistor 662c, discharge enable switch 664d, and balancing resistor 332b electrically connected in series. Thus, in an instance in which the discharge enable switch 664d is enabled by the battery management controller 442, current flows through the discharge circuit 446d, discharging excess charge from the battery cell 102d.

As depicted in FIG. 6, each discharge circuit 446a-446d comprises at least one shared balancing resistor 662a-662c with an adjacent battery cell 102a-102d. Utilizing shared balancing resistors 662a-662c between adjacent battery cells 102a-102d reduce the size, cost, and complexity of the battery management system IC 444. However, shared balancing resistor 662a-662c prevent discharging of adjacent battery cells 102a-102d simultaneously, since enabling the discharge enable switch 664a-664d of two adj acent battery cells 102a-102d would increase the current flowing through the electrical components of the battery management system IC 444, potentially damaging the electrical components.

As further depicted in FIG. 6, each discharge circuit 446a-446d includes a discharge enable switch 664a-664d. Although depicted as a MOSFET, a discharge enable switch 664a-664d may comprise any switching device configured to enable based on one or more electronic signals transmitted by the battery management controller 442. As depicted in FIG. 6, the battery management controller 442 may cause a change in voltage at the gate of the discharge enable switch 664a-664d. The change in voltage may enable current flow through the source and drain of the discharge enable switch 664a-664d, causing the associated battery cell 102a-102d to discharge.

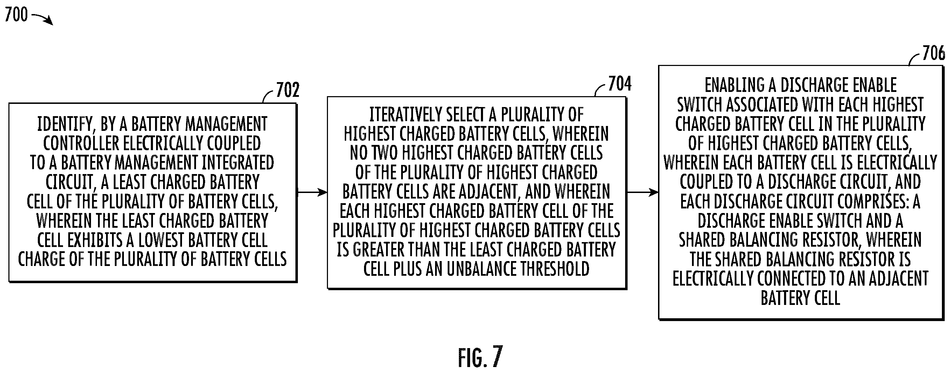

Referring now to FIG. 7, an example process 700 for iteratively selecting non-adjacent, highest charged battery cells in order to passively balance a plurality of battery cells (e.g., battery cells 102) in a battery pack (e.g., battery pack 100) is provided. At block 702, a battery management controller (e.g., battery management controller 442) identifies a least charged battery cell (e.g., least charge battery cell 222) of the plurality of battery cells, wherein the least charged battery cell exhibits a lowest battery cell charge (e.g., battery cell charge 226) of the plurality of battery cells. As described herein, the battery management controller may utilize the battery management system IC to monitor one or more electrical properties of each of the battery cells, for example, voltage, charge, amperage, ampere hours, energy, and so on. In an instance in which the battery pack is unbalanced, the battery management controller may identify the battery cell exhibiting the lowest battery cell charge.

At block 704, a battery management controller may iteratively select a plurality of highest charged battery cells, wherein no two highest charged battery cells of the plurality of highest charged battery cells are adjacent, and wherein each highest charged battery cell of the plurality of highest charged battery cells is greater than the least charged battery cell plus an unbalance threshold. In order to efficiently perform passive balancing of a battery pack, the battery management controller may first select the battery cell exhibiting the highest battery cell charge above the battery cell charge lowest level (e.g., battery cell charge lowest level 334) plus an unbalance threshold. Once a battery cell is selected for discharge, the one or more battery cells adjacent to the selected battery cell must be disabled from discharge operations.

The iterative selection of a plurality of highest charged battery cells continues with all remaining battery cells that have not been selected for discharge or removed from consideration for discharge. For example, the remaining highest charged battery cell of the plurality of battery cells is added to the plurality of highest charged battery cells and selected for discharge, if the battery cell charge of the remaining highest charged battery cell is above the battery cell charge lowest level, plus the unbalance threshold.

The iterative selection of the remaining highest charged battery cell to the plurality of highest charged battery cells continues until all battery cells have been selected to be discharged or designated as not being discharged.

At block 706, the battery management controller enables a discharge enable switch (e.g., discharge enable switch 664) associated with each highest charged battery cell in the plurality of highest charged battery cells, wherein each battery cell is electrically coupled to a discharge circuit (e.g., discharge circuit 446), and each discharge circuit comprises: a discharge enable switch and a shared balancing resistor (e.g., shared balancing resistor 662), wherein the shared balancing resistor is electrically connected to an adjacent battery cell. Iteratively selecting the remaining highest charged battery cell may result in a plurality of highest charged battery cells selected for discharge. The battery management controller may enable the discharge switch of the discharge circuit associated with each battery cell in the plurality of highest charged battery cells. The battery management controller may discharge the plurality of highest charged battery cells simultaneously, until one or more of the plurality of highest charged battery cells are within the unbalance threshold of the battery cell charge lowest level.

The process 700 may be repeated for any remaining unbalanced battery cells. Utilizing the process 700 to iteratively select the non-adjacent highest charged battery cells and simultaneously discharge the non-adjacent highest charged battery cells may result in efficient passive balancing of a battery pack.

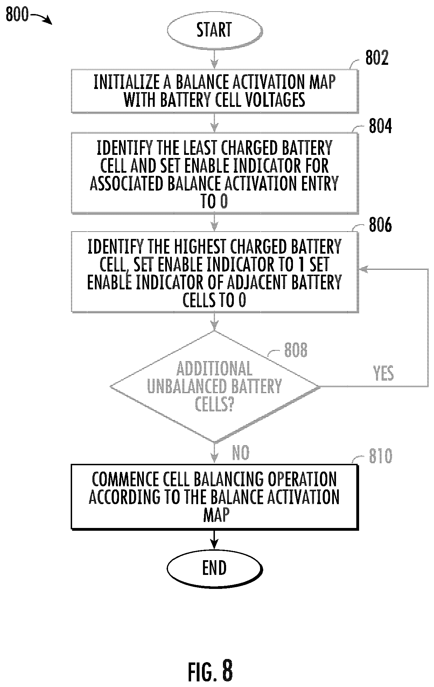

Referring now to FIG. 8, an example flowchart depicted a process 800 for iteratively selecting non-adjacent, highest charged battery cells in order to passively balance a plurality of battery cells (e.g., battery cells 102) in a battery pack (e.g., battery pack 100) is provided.

At block 802, a battery management controller (e.g., battery management controller 442) initializes a balance activation map.

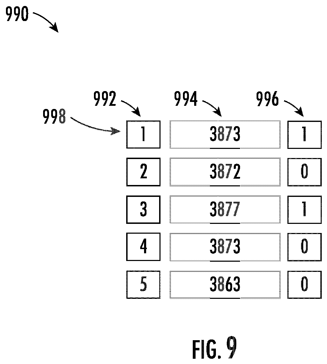

Referring to FIG. 9, an example balance activation map 990 is provided. As depicted in FIG. 9, a balance activation map 990 includes a plurality of balance activation entries 998, each entry associated with a battery cell in the battery pack. A balance activation entry 998 includes a battery cell identifier 992, configured to identify each battery cell. A battery cell identifier 992 may be any data or value configured to uniquely identify a battery cell. For example, a battery cell identifier 992 may be the pin number on the battery management system IC (e.g., battery management system IC 444) associated with the battery cell. In some embodiments, sequential battery cell identifiers 992 may correspond to adjacent battery cells.

A balance activation entry 998 of the balance activation map 990 further includes a battery cell value 994. The battery cell value 994 may comprise any data or value configured to represent the battery cell charge of a battery cell. For example, the battery cell value 994 may indicate a measured voltage of the battery cell or the battery state of charge in percentage.

A balance activation entry 998 of the balance activation map 990 further includes an enable indicator 996. An enable indicator indicates whether the battery cell identified by the battery cell identifier 992 is selected for discharge or designated not to be discharged. For example, an enable indicator 996 may comprise a Boolean value, for example, a single bit wherein a '1' indicates the battery cell is selected for discharge and a '0' indicates the battery cell is not selected for discharge.

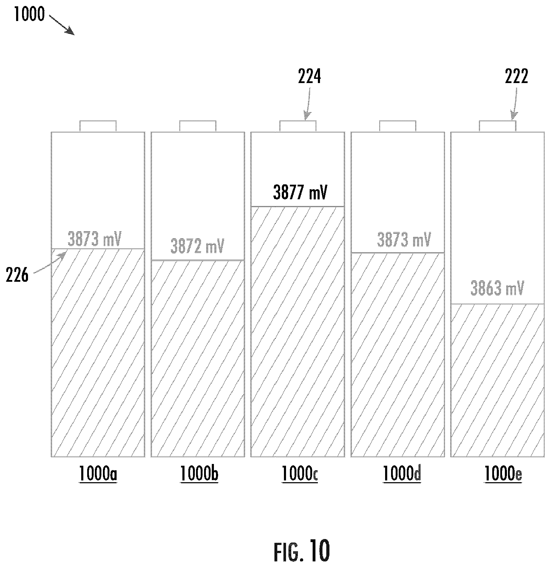

Referring now to FIG. 10, an example battery pack 1000 is provided. As depicted in FIG. 10, the example battery pack includes five battery cells 1000a-1000e. Each battery cell includes a measured battery cell charge 226, measured in millivolts. As shown in FIG. 10, the third battery cell (battery cell 1000c) is the highest charged battery cell 224 and the fifth battery cell (battery cell 1000e) is the least charged battery cell 222.

Returning to FIG. 8, a battery management controller may initialize a balance activation map by creating a balance activation entry for each battery cell in a battery pack and determining a battery cell identifier to uniquely identify the battery cell. In addition, the battery management controller may set the battery cell value for each battery cell in the balance activation map. Further, the battery management controller may set the enable indicator for each balance activation entry to a value indicating the battery cell has not been selected for discharge or designated not to be discharged (e.g., '-1').

For example, for the example battery pack 1000 depicted in FIG. 10, the battery cell identifiers may be initialized in a sequential order, '1' for 1000a, '2' for 1000b, '3' for 1000c, '4' for 1000d, and '5' for 1000e. In addition, the battery cell values may be set to the measured voltages (in millivolts) of each battery cell; 3873 for 1000a (e.g., battery cell identifier 1), 3872 for 1000b (e.g., battery cell identifier 2), 3877 for 1000c (e.g., battery cell identifier 3), 3873 for 1000d (e.g., battery cell identifier 4), and 3863 for 1000e (e.g., battery cell identifier 5). Further, the enable indicator for every balance activation entry in the balance activation map may be set to '-1,' indicating the battery cell has not been selected for discharge or designated not to be discharged.

At block 804, the battery management controller identifies the least charged battery cell and sets the enable indicator for the associated balance activation entry to 0, indicating the corresponding battery cell is designated not to be discharged. As depicted in FIG. 9, based on the example battery pack 1000 of FIG. 10, the fifth battery cell (1000e) is identified as the least charged battery cell and the enable indicator 996 of the balance activation entry for the fifth battery cell (e.g., battery cell identifier 992 is 5) is set to 0.

At block 806, the battery management controller identifies the highest charged battery cell and sets the enable indicator for the associated balance activation entry to 1 if the battery cell charge of the highest charged battery cell is greater than the unbalance threshold plus the battery cell charge of the least charged battery cell. Setting the enable indicator to 1 indicates the corresponding battery cell is selected for discharge. As depicted in FIG. 9, based on the example battery pack 1000 of FIG. 10, the third battery cell (1000c) is identified as the highest charged battery cell and the enable indicator 996 of the balance activation entry for the third battery cell (e.g., battery cell identifier 992 is 3) is set to 1.

In addition, the battery management controller sets the enable indicator for all adjacent cells to the highest charged battery cell to 0, indicating the corresponding battery cells are designated not to be discharged. As depicted in FIG. 9, since the battery cell identifiers of the balance activation map are sequential, the adjacent battery cells are identified by sequential battery cell identifiers. Thus, the second battery cell (1000b) and the fourth battery cell (1000d) are identified as adjacent battery cells and the enable indicator 996 of the balance activation entry for the second battery cell (e.g., battery cell identifier 992 is 2) and the fourth battery cell (e.g., battery cell identifier 992 is 4) are set to 0.

At block 808, the battery management controller checks for additional unbalanced battery cells that have not been selected for discharge or designated not to be discharged. Unbalanced battery cells are any battery cells having a battery cell charge greater than the battery cell charge of the least charged battery cell by more than at least the unbalance threshold. In an instance in which additional unbalanced battery cells are undesignated, the process 800 returns to block 806. In an instance in which there are no undesignated unbalanced battery cells, the process 800 continues at block 810.

As depicted in FIG. 9, based on the example battery pack 1000 of FIG. 10, the first battery cell (1000a) is undesignated (e.g., the battery cell has not been selected for discharge or designated not to be discharged) and is unbalanced. Thus, the process 800 would return to block 806 and set the enable indicator 996 of the balance activation entry for the first battery cell (e.g., battery cell identifier 992 is 1) is set to 1.

At block 810, the cell balancing operation is commenced based on the balance activation map. The battery management controller may reference the balance activation map to determine the one or more battery cells selected for discharge. The battery management controller may further enable the discharge enable switch (e.g., discharge enable switch 664) associated with each battery cell identified in the balance activation map. Enabling the discharge enable switch of the discharge circuit (e.g., discharge circuit 446) associated with the battery cell will allow extra charge within the battery cell to be discharged. The battery management controller may monitor the electrical properties of the battery cell during discharge. Once at least one of the plurality of highest charged battery cells is balanced (e.g., the battery cell charge is within an unbalance threshold of the battery cell charge lowest level), the cell balancing operation is terminated for the selected cells. The process 800 depicted in the flowchart of FIG. 8 may be repeated for any remaining unbalanced cells. The process may continue until all battery cells within the battery pack are balanced.

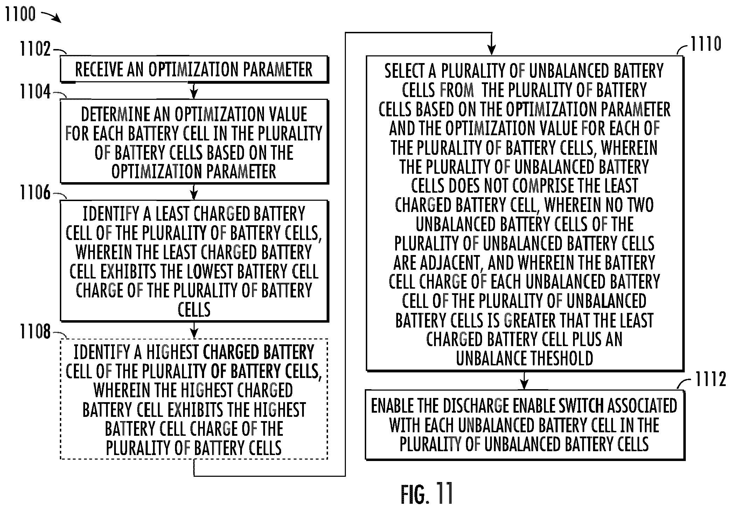

Referring now to FIG. 11, an example process 1100 for balancing one or more battery cells (e.g., battery cells 102) in a battery pack (e.g., battery pack 100) based on an optimization parameter is provided. At block 1102, a battery management controller (e.g., battery management controller 442) is configured to receive an optimization parameter. An optimization parameter comprises one or more data constructs indicating one or more characteristics to be optimized during passive charge balancing. In one non-limiting example, the optimization parameter may be total passive charge balancing time, thus, the selection of battery cells for discharge is determined based on reducing the total time to perform the passive charge balancing. In another non-limiting example, the optimization parameter may indicate the number of passive charge balancing iterations. Thus, the selection of battery cells for discharge is determined based on optimizing the number of passive charge balancing iterations that may be performed to complete the passive charge balancing. Another optimization parameter may be related to the technology or the chemistry, of the battery cells composing the battery pack. For example, the performance of battery cells may last longer based on the battery cell technology or chemistry. Thus, in another non-limiting embodiment, a metric based on the chemistry or the technology of the battery cells constituting the battery pack could be useful to monitor/balance the least stable battery cells. In another non-limiting example, an optimization parameter may represent the state of health of the battery cells. For example, an optimization parameter that indicates those battery cells that may have worst performances due to premature aging. Additional optimization parameters may include reducing overall power consumption, reducing wasted charge discharged from the power cells, optimizing battery life, and so on.

At block 1104, the battery management controller determines an optimization value for each battery cell in the plurality of battery cells based on the optimization parameter. An optimization value is any data value representing the characteristics of the associated battery cell in relation to the optimization parameter. For example, in some embodiments, the optimization value may be the battery cell charge. In an instance in which the battery cell charge is utilized as the optimization value, the selection of battery cells may be optimized based on time, number of iterations, wasted charge, overall power consumption. In some instances, the optimization value of a battery cell may be weighted. In some embodiments, the optimization value may be based on multiple characteristics of a battery cell. For example, battery cells may comprise various internal chemistries. The optimization value may be configured based on the chemistry of the battery and another electrical parameter, such as the battery cell charge.

At block 1106, the battery management controller identifies a least charged battery cell (e.g., least charged battery cell 222) of the plurality of battery cells, wherein the least charged battery cell exhibits the lowest battery cell charge of the plurality of battery cells. The least charged battery cell may be used to determine the battery cell charge lowest level (e.g., battery cell charge lowest level 334) indicating the battery charge level of the least charged battery cell in the battery cell pack. Any battery cells with a battery charge level greater that the battery cell charge lowest level plus the unbalance threshold are considered unbalanced.

At block 1108, the battery management controller optionally identifies a highest charged battery cell (e.g., highest charged battery cell 224) of the plurality of battery cells, wherein the highest charged battery cell exhibits the highest battery cell charge of the plurality of battery cells. In some embodiments, the highest charged battery cell may be selected for discharge automatically during the first discharge iteration. In such an embodiment, the highest charged battery cell is added to the plurality of unbalanced battery cells and the one or more battery cells adjacent to the highest charged battery cell are designated as not to be discharged. In some embodiments, the process 1100 may continue without identifying the highest charged battery cell.

At block 1110, the battery management controller selects a plurality of unbalanced battery cells from the plurality of battery cells based on the optimization parameter and the optimization value for each of the plurality of battery cells, wherein the plurality of unbalanced battery cells does not comprise the least charged battery cell, wherein no two unbalanced battery cells of the plurality of unbalanced battery cells are adjacent, and wherein the battery cell charge of each unbalanced battery cell of the plurality of unbalanced battery cells is greater that the least charged battery cell plus an unbalance threshold. The battery management controller may select a plurality of unbalanced battery cells based on the optimization value for each of the plurality of battery cells and the classification of a battery cell as unbalanced. As described herein, any battery cell having a battery cell charge greater than the battery cell charge lowest level plus an unbalance threshold is considered unbalanced. The battery management controller is configured to select unbalanced battery cells for discharge based on the optimization value associated with the unbalanced battery cell. In addition, no two battery cells selected in the plurality of unbalanced battery cells may be adjacent. Further, the least charged battery cell is not included in the plurality of unbalanced battery cells.

The battery management controller may utilize any method for selecting unbalanced battery cells based on the optimization value. For example, the battery management controller may generate all possible combinations of unbalanced battery cells meeting the selection criteria (e.g., valid combination set). The battery management controller may select the valid combination with the highest accumulated total optimization value, for example, by accumulating the optimization values of the selected unbalanced battery cells. The battery management controller may select the valid combination with the highest average optimization value per battery cell, for example, by accumulating the optimization values of the selected unbalanced battery cells and dividing by the number of selected unbalanced battery cells.

The battery management controller may further utilize an algorithm to select the plurality of unbalanced battery cells. For example, genetic algorithms, simulated annealing, particle swarm optimizations, ant colony optimizations, fuzzy optimizations, neural network based optimizations, linear programming optimization techniques, and so on. An optimization algorithm may be configured to select a set of unbalanced battery cells not including the least charged battery cell and not including any adjacent battery cells, such that the optimization value is optimized. Optimizing the optimization value may include finding a combination of unbalanced battery cells with a minimum total optimization value, a minimum average optimization value, a maximum total optimization value, a maximum average optimization value, and so on. In some embodiments, the optimization value may comprise the battery cell charge of each of the battery cells in the battery pack.

In some embodiments, the selection of the plurality of unbalanced battery cells may be optimized across discharge iterations. For example, the selection of the plurality of unbalanced battery cells may be optimized to minimize the number of discharge iterations required to fully balance the battery pack. Further, the optimization algorithm may consider multiple discharge iterations in optimizing the selection of the plurality of unbalanced battery cells with respect to the optimization parameter.

At block 1112, the battery management controller enables the discharge enable switch (e.g., discharge enable switch 664) associated with each unbalanced battery cell in the plurality of unbalanced battery cells. Enabling the discharge enable switch of the discharge circuit (e.g., discharge circuit 446) associated with the battery cell will allow extra charge within the battery cell to be discharged. The battery management controller may monitor the electrical properties of the plurality of unbalanced battery cells during discharge. Once at least one of the plurality of unbalanced battery cells is balanced (e.g., the battery cell charge is within an unbalance threshold of the battery cell charge lowest level), the cell balancing operation is terminated for the selected cells. The process 1100 may be repeated for any remaining unbalanced cells and continue until all battery cells within the battery pack are balanced.

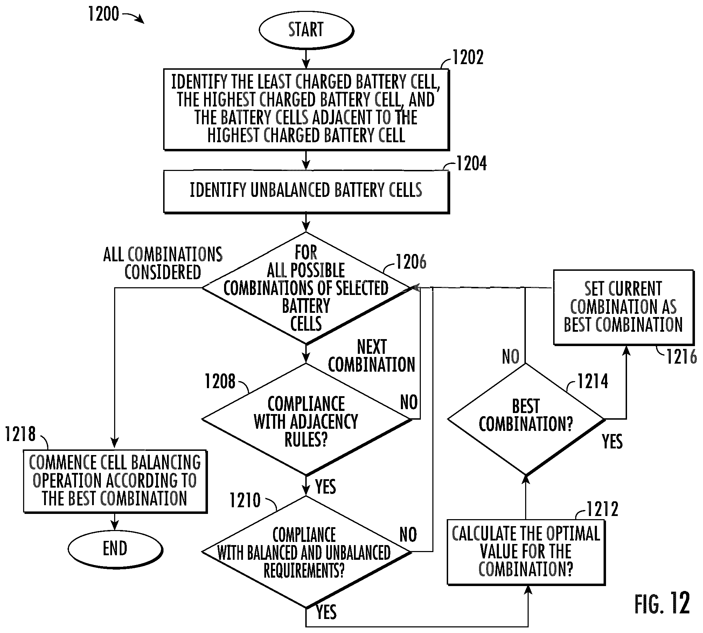

Referring now to FIG. 12, an example flowchart depicting a process 1200 for selecting a plurality of unbalanced battery cells in accordance with an optimization parameter is provided.

At block 1202, a battery management controller (e.g., battery management controller 442) identifies the least charged battery cell (e.g., least charged battery cell 222). The identified least charged battery cell indicates the battery cell charge lowest level (e.g., battery cell charge lowest level 334), for example, the battery cell charge of the least charged battery cell. The battery cell charge lowest level enables a battery management controller to determine unbalanced battery cells. The battery cell charge lowest level further provides a target battery cell charge for discharged battery cells during passive charge balancing.

At block 1202, the battery management controller further identifies the highest charged battery cell. In some embodiments, the battery management controller may automatically select the highest charge battery cell for discharge. In an instance in which the highest charged battery cell is selected for discharge, the one or more adjacent battery cells to the highest charged batter cell is/are designated not to be discharged.

The battery management controller may utilize any mechanism to store data indicating the least charged battery cell, the highest charged battery cell, and/or the one or more adjacent battery cells to the highest charged battery cell. For example, the battery management controller may utilize a data structure, such as a map, list, dictionary, set, bitmap, array, or other similar structure. For example, in one embodiment, a pattern mask may be generated to record the battery cells selected for discharge and the battery cells designated not to be discharged. One example pattern mask includes a sequence of enable indicators, each enable indicator corresponding to an index of a battery cell in the battery pack. A pattern mask utilizing a sequence enable indicators may, for example, set a value to 1 to indicate a battery cell is selected for discharge, a 0 to indicate a battery cell is designated not to be discharged, and a -1 to indicate a battery cell has neither been selected for discharge nor designated not to be discharged. In some embodiments, multiple pattern masks may be utilized, for example, one for indicating battery cells selected for discharge and one indicating battery cells designated not to be discharged.

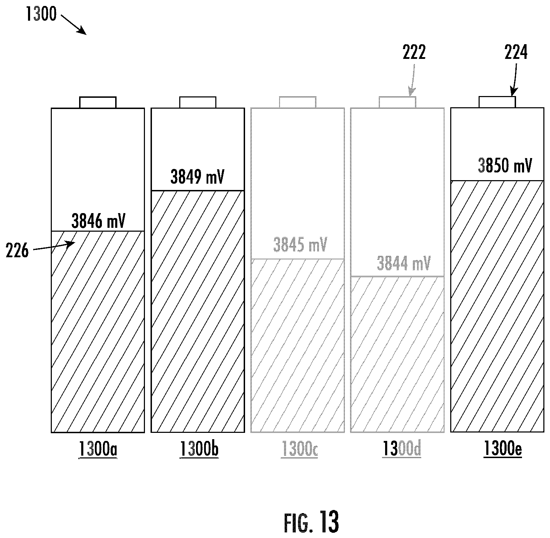

Referring now to FIG. 13, an example battery pack 1300 is provided. As depicted in FIG. 13, the example battery pack includes five battery cells 1300a-1300e. Each battery cell includes a measured battery cell charge 226, measured in millivolts. As shown in FIG. 13, the fifth battery cell (battery cell 1300e) is the highest charged battery cell 224 (3849 millivolts) and the fourth battery cell (battery cell 1300d) is the least charged battery cell 222 (3844 millivolts). In an instance in which the unbalance threshold is 0.9 millivolts, all battery cells besides the least charged battery cell (e.g., battery cells 1300a, 1300b, 1300c, 1300e) are unbalanced.

Returning to FIG. 12, at block 1202, based on the example battery pack 1300 of FIG. 13, the fourth battery cell (1300d) is identified as the least charged battery cell and the fifth battery cell (1300e) is identified as the highest charged battery cell. The battery management controller may update the one or more pattern masks to indicate the fifth battery cell (1300e) is selected for discharge and the fourth battery cell (1300d) is designated not to be discharged. Since the one battery cell adjacent to the highest charged battery cell is the least charged battery cell, no adjacent battery cells are designated not to be discharged.

At block 1204, the battery management controller identifies all unbalanced battery cells. An unbalanced battery cell is any battery cell exhibiting a battery cell charge above the battery cell charge lowest level plus the unbalance threshold. During a passive charge balancing process, unbalanced battery cells may be selected for discharge. In some embodiments, the passive charge balancing process may continue until the battery cell charge of all unbalanced battery cells are within the unbalance threshold of the battery cell charge lowest level. The storing mechanism of the battery management controller may be updated to identify the unbalanced battery cells. For example, the pattern mask may be updated to indicate balanced battery cells are not designated to be discharged by setting the enable indicator associated with the index of the balanced battery cells to 0.

In the example battery pack 1300 of FIG. 13, all battery cells besides the least charged battery cell (e.g., battery cells 1300a, 1300b, 1300c, 1300e) are unbalanced, thus, no further updates to the pattern mask are necessary.

At block 1206, the battery management controller iterates through all possible combinations of selected battery cells based on the designation of the least charged battery cell, the highest charged battery cell, the battery cells adjacent to the highest charged battery cell, and the identification of unbalanced battery cells. In some examples, all possible combinations of selected battery cells are generated. The battery management controller may loop through the list of possible combinations and test for an optimal solution. In each instance in which there is still a combination of selected battery cells to be considered, the process 1200 continues at block 1208. Once all possible combinations have been considered, the process 1200 continues at block 1216.

At block 1208, the battery management controller considers the next combination of selected battery cells by checking the compliance of the selected battery cells with adjacency rules. Thus, the battery management controller only considers combinations of selected battery cells in which no two adjacent battery cells are selected for discharge. In an instance in which the combination of selected battery cells includes two adjacent battery cells selected for discharge, the process 1200 continues at block 1206. In an instance in which the combination of selected battery cells complies with the adjacency rules, the process 1200 continues at block 1210.

At block 1210, the battery management controller considers the next combination of selected battery cells by checking compliance of the selected battery cells with balanced and unbalanced requirements. Thus, the battery management controller only considers combinations of selected battery cells in which the battery cells selected for discharge are unbalanced, for example, by comparing the battery cells selected for discharge with the unbalanced battery cells identified at block 1204. In an instance in which the combination of selected battery cells includes balanced battery cells, the process 1200 continues at block 1206. In an instance in which the combination of selected battery cells includes only unbalanced battery cells, the process 1200 continues at block 1212.

As described herein, the set of combinations in compliance with the adjacency rules; the balanced and unbalanced requirements; and the designation of the least charged battery cell as not being discharged may be referred to the valid combination set. The valid combination set includes all possible combinations of selected cells in compliance with the established requirements. In some embodiments, the valid combination set may be determined in blocks 1206-1208.

At block 1212, the battery management controller calculates the optimal value for the combination. The optimal value for the combination may be determined based on the optimization value associated with each battery cell selected in the combination of selected battery cells. In one example embodiment, the optimal value of a combination of selected battery cells may be determined by accumulating the optimization values of the selected battery cells. For example, by performing a summation such as:

$$(1) \; Opt_k = \sum_{k=1}^{N} V_{cell}[k] \cdot Map[k]$$

where $V_{cell}$ includes the optimization value of each battery cell $k$, $Map$ includes an indicator of whether the battery cell $k$ is selected for discharge, $N$ is the total number of battery cells, and $Opt_k$ is the optimal value for the combination of selected battery cells. In another embodiment, the average optimal value may be determined, for example, by performing the operation:

$$(2) \; Opt_k = \frac{\sum_{k=1}^{N} V_{cell}[k] \cdot Map[k]}{N}$$

For example, based on the example battery pack 1300 of FIG. 13, the Map [10101] meets the adjacency rule requirements and is in compliance with the balanced and unbalanced requirements. The process 1200 may utilize the Map [10101] representing a first combination of selected battery cells in which the first battery cell (1300a), the third battery cell (1300c), and the fifth battery cell (1300e) are selected for discharge. The optimal value according to Equation (1) is:

$$Opt_k = 3846 + 3845 + 3850 = 11541$$

However, utilizing the same Map [10101] the optimal value of the same combination of selected battery cells according to the average optimal value of Equation (2) is:

$$Opt_k = \frac{3846 + 3845 + 3850}{3} = 3847$$

Similarly, based on the example battery pack 1300 of FIG. 13, in a second combination of selected battery cells based on the Map [01001] in which the second battery cell (1300b) and the fifth battery cell (1300e) are selected for discharge, the optimal value according to Equation (1) is:

$$Opt_k = 3849 + 3850 = 7699$$

However, the optimal value of the second combination of selected battery cells according to the average optimal value of Equation (2) is:

$$Opt_k = \frac{3849 + 3850}{2} = 3849.5$$

As described herein, any value may be assigned to each battery cell as an optimization value, thus representing the cost of the battery cell in an optimization function.

At block 1214, the optimal value determined for the combination of selected battery cells is compared to the stored best combination of selected battery cells. The best combination may be determined by comparing the optimal value of the current combination of selected battery cells to the optimal value of the stored best combination of selected battery cells. In some embodiments, the best combination of selected battery cells may be the combination of selected battery cells associated with the highest optimal value. In some embodiments, the best combination of selected battery cells may be the combination of selected battery cells associated with the lowest optimal value.

Continuing with the example above, in an instance in which the battery management controller at block 1214 utilizes an accumulated optimal value according to Equation (1) and in which block 1214 considers the highest optimal value as the best combination, the first combination of selected battery cells exhibits a higher optimal value (11,541) than the second combination of selected battery cells (7,699). Thus, in an instance in which the first combination of selected battery cells has been previously stored as the best combination, the battery management controller at block 1214 determines that the second combination of selected battery cells is not better and the process 1200 continues operation at block 1206.

However, in an instance in which the battery management controller at block 1214 utilizes an average optimal value according to Equation (2), the first combination of selected battery cells exhibits a lower optimal value (3847) than the second combination of selected battery cells (3849.5). Thus, in an instance in which the first combination of selected battery cells has been previously stored as the best combination, the battery management controller at block 1214 determines that the second combination of selected battery cells is better and the process 1200 continues operation at block 1216.

At block 1216, the battery management controller stores the current combination of selected battery cells as the best combination of selected battery cells. In some embodiments, the combination of selected battery cells may be stored by a bit sequence of 1s and 0s, in which a 1 represents the battery cell with associated index is selected for discharge and a 0 indicates the battery cell with associated index is not selected for discharge.

At block 1216, the battery management controller commences the cell balancing operation based on the best combination of selected battery cells according to the optimal value. The battery management controller may reference the data structure representing the best combination of selected battery cells to determine the one or more battery cells selected for discharge. The battery management controller may further enable the discharge enable switch (e.g., discharge enable switch 664) associated with each battery cell identified in the best combination of selected battery cells. Enabling the discharge enable switch of the discharge circuit (e.g., discharge circuit 446) associated with the battery cell will allow extra charge within the battery cell to be discharged. The battery management controller may monitor the electrical properties of the battery cell during discharge. Once at least one of the plurality of highest charged battery cells is balanced (e.g., the battery cell charge is within an unbalance threshold of the battery cell charge lowest level), the cell balancing operation is terminated for the selected cells. The process 1200 may be repeated for any remaining unbalanced cells. The process may continue until all battery cells within the battery pack are balanced.

While this detailed description has set forth some embodiments of the present invention, the appended claims cover other embodiments of the present invention which differ from the described embodiments according to various modifications and improvements. For example, one skilled in the art may recognize that such principles may be applied to any electronic device that utilizes a battery pack having a plurality of battery cells for power. For example, a mobile electronic device, such as a laptop, mobile phone, tablet, cameras, and so forth; appliances; power tools; electric vehicles; battery-powered recreational devices; and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

**Claims**

1. A battery management system comprising:

    - a battery pack comprising a plurality of battery cells electrically connected in series, each battery cell exhibiting a battery cell charge;
    - a battery management integrated circuit comprising:

        - a discharge circuit for each battery cell, the discharge circuit comprising: a discharge enable switch and a shared balancing resistor, wherein the shared balancing resistor is electrically connected to an adjacent battery cell; and
        - a battery management controller electrically coupled to the battery management integrated circuit, comprising one or more processors and one or more storage devices storing instructions that are operable when executed by the one or more processors to:

            - identify a least charged battery cell of the plurality of battery cells, wherein the least charged battery cell exhibits the lowest battery cell charge of the plurality of battery cells.

2. The system of claim 1, wherein said one or more processors and one or more storage devices storing instructions that are operable when executed by the one or more processors to:

    - iteratively select a plurality of highest charged battery cells,

        - wherein no two highest charged battery cells of the plurality of highest charged battery cells are adjacent, and
        - wherein each highest charged battery cell of the plurality of highest charged battery cells is greater than the least charged battery cell plus an unbalance threshold; and

    - enable the discharge enable switch associated with each highest charged battery cell in the plurality of highest charged battery cells.

3. The system of claim 1, wherein:
    said one or more processors and one or more storage devices storing instructions that are operable when executed by the one or more processors to:

    - receive an optimization parameter;
    - determine an optimization value for each battery cell in the plurality of battery cells based on the optimization parameter;
    - identify a least charged battery cell of the plurality of battery cells, wherein the least charged battery cell exhibits the lowest battery cell charge of the plurality of battery cells;
    - select a plurality of unbalanced battery cells from the plurality of battery cells based on the optimization parameter and the optimization value for each of the plurality of battery cells,
    - wherein the plurality of unbalanced battery cells does not comprise the least charged battery cell,
    - wherein no two unbalanced battery cells of the plurality of unbalanced battery cells are adjacent, and
    - wherein the battery cell charge of each unbalanced battery cell of the plurality of unbalanced battery cells is greater that the least charged battery cell plus an unbalance threshold; and
    - enable the discharge enable switch associated with each unbalanced battery cell in the plurality of unbalanced battery cells.

4. A method for passive charge balancing a battery pack comprising a plurality of series-connected battery cells each exhibiting a battery cell charge, the method comprising:

    - identifying, by a battery management controller electrically coupled to a battery management integrated circuit, a least charged battery cell of the plurality of battery cells, wherein the least charged battery cell exhibits a lowest battery cell charge of the plurality of battery cells;
    - iteratively selecting a plurality of highest charged battery cells,

        - wherein no two highest charged battery cells of the plurality of highest charged battery cells are adjacent, and

- wherein each highest charged battery cell of the plurality of highest charged battery cells is greater than the least charged battery cell plus an unbalance threshold; and

- enabling a discharge enable switch associated with each highest charged battery cell in the plurality of highest charged battery cells, wherein each battery cell is electrically coupled to a discharge circuit, the discharge circuit comprising:

- a discharge enable switch and a shared balancing resistor,
- wherein the shared balancing resistor is electrically connected to an adjacent battery cell.

5. A computer program product for passive charge balancing a battery pack comprising a plurality of battery cells electrically connected in series, the computer program product comprising at least one non-transitory computer-readable storage medium having computer-readable program code portions stored therein, the computer-readable program code portions comprising an executable portion configured to:

- identify, by a battery management controller electrically coupled to a battery management integrated circuit, a least charged battery cell of the plurality of battery cells, wherein the least charged battery cell exhibits a lowest battery cell charge of the plurality of battery cells;
- iteratively select a plurality of highest charged battery cells,

- wherein no two highest charged battery cells of the plurality of highest charged battery cells are adjacent, and
- wherein each highest charged battery cell of the plurality of highest charged battery cells is greater than the least charged battery cell plus an unbalance threshold; and

- enable a discharge enable switch associated with each highest charged battery cell in the plurality of highest charged battery cells,

- wherein each battery cell is electrically coupled to a discharge circuit, and each discharge circuit comprises:
- the discharge enable switch and a shared balancing resistor, wherein the shared balancing resistor is electrically connected to an adjacent battery cell.

6. The battery management system of claim 2, wherein the discharge enable switch associated with each highest charged battery cell in the plurality of highest charged battery cells is enabled until at least one of the plurality of highest charged battery cells is balanced with the least charged battery cell.

7. The method of claim 4, or the computer program product of claim 5, further comprising:

- enabling the discharge enable switch associated with each highest charged battery cell in the plurality of highest charged battery cells until each highest charged battery cell is balanced with the least charged battery cell.

8. The battery management system of claim 6, or the method or computer program product of claim 7, wherein a battery cell of the plurality of battery cells is balanced in an instance in which a battery cell value or a battery cell charge of the battery cell is within the unbalance threshold of the least charged battery cell.

9. The battery management system of any of claims 2, 6 and 8, or the method of any of claims 4, 7 and 8, or the computer program product of any of claims 5, 7 and 8, wherein the discharge enable switch is a field-effect transistor, and enabling the discharge enable switch further comprises:

- modifying a gate voltage at a gate of the field-effect transistor to discharge an associated battery cell.

10. The battery management system of any of claims 2, 6, 8 or 9, or the method of any of claims 4, 7 to 9, or the computer program product of any of claims 5, 7 to 9, wherein the battery management controller is configured to monitor one or more electrical properties of each battery cell of the plurality of battery cells, and/or

wherein the one or more electrical properties are determined by a pair of electrical connecting pins on the battery management integrated circuit, and/or
wherein a first electrical connecting pin of the pair of electrical connecting pins is electrically connected to an anode of the battery cell and a second electrical connecting pin of the pair of electrical connecting pins is electrically connected to a cathode of the battery cell.

11. The battery management system or the method or the computer program product of claim 10, wherein the one or more electrical properties includes at least one of a voltage of a battery cell, a charge of the battery cell, an amperage of the battery cell, an ampere hours remaining of the battery cell, and energy remaining in the battery cell.

12. The battery management system of any of claims 2, 6, 8 to 11, or the method of any of claims 4, 7 to 11, or the computer program product of any of claims 5, 7 to 11,wherein the discharge circuit for each battery cell comprises a first balancing resistor, the discharge enable switch, and a second balancing resistor electrically connected in series with the battery cell, wherein the shared balancing resistor comprises at least one of the first balancing resistor and the second balancing resistor.

13. The battery management system of any of claims 2, 6, 8 to 12, wherein the battery management controller is further configured to, or the method of any of claims 4, 7 to 12, or the computer program product of any of claims 5, 7 to 12, further comprising:-
generate a balance activation map comprising a balance activation entry for each battery cell in the plurality of battery cells,

   - wherein the balance activation entry comprises:

      - a battery cell identifier, identifying an associated battery cell;
      - a battery cell value indicating the battery cell charge of the associated battery cell; and
      - an enable indicator, indicating the associated battery cell will be discharged.

14. The battery management system of claim 3, wherein the optimization value represents a quantification of the unbalanced battery cell in relation to the optimization parameter.

15. The battery management system of claim 14, wherein the battery management controller is further configured to:

      - generate a valid combination set, wherein the valid combination set comprises all possible combinations of unbalanced battery cells selected for discharge, and/or
      - select a combination from the valid combination set based on the optimization values associated with each unbalanced battery cell in the combination.

16. The battery management system of any of claims 3, 14 and 15, wherein the optimization parameter indicates selection of the plurality of unbalanced battery cells from the plurality of battery cells is optimized to reduce time.

17. The battery management system of claim 16, wherein the plurality of unbalanced battery cells are selected to minimize a number of balancing iterations, or to maximize a number of unbalanced battery cells comprising the plurality of unbalanced battery cells.

FIG. 1

FIG. 2

FIG. 3

440 →

```
┌─────────────────┐   ┌─────────────────────────┐   ┌─────────────────────┐
│                 │   │   ┌───────────┐          │   │  ┌───────────────┐  │
│                 │   │ ─▶│   446a    │◀─    ◀───┼───┼─▶│     102a      │  │
│    BATTERY      │   │   └───────────┘          │   │  └───────────────┘  │
│   MANAGEMENT    │◀─▶│ ─▶│   446b    │◀─    ◀───┼───┼─▶│     102b      │  │
│   CONTROLLER    │   │   └───────────┘          │   │  └───────────────┘  │
│      442        │   │ ─▶│   446c    │◀─    ◀───┼───┼─▶│     102c      │  │
│                 │   │   └───────────┘          │   │  └───────────────┘  │
│                 │   │ ─▶│   446d    │◀─    ◀───┼───┼─▶│     102d      │  │
│                 │   │   └───────────┘          │   │  └───────────────┘  │
│                 │   │ BMS INTEGRATED CIRCUIT   │   │   BATTERY PACK      │
│                 │   │         444              │   │       100           │
└─────────────────┘   └─────────────────────────┘   └─────────────────────┘
```

FIG. 4

442 →

FIG. 5

FIG. 6

700 ⌐

702

IDENTIFY, BY A BATTERY MANAGEMENT CONTROLLER ELECTRICALLY COUPLED TO A BATTERY MANAGEMENT INTEGRATED CIRCUIT, A LEAST CHARGED BATTERY CELL OF THE PLURALITY OF BATTERY CELLS, WHEREIN THE LEAST CHARGED BATTERY CELL EXHIBITS A LOWEST BATTERY CELL CHARGE OF THE PLURALITY OF BATTERY CELLS

704

ITERATIVELY SELECT A PLURALITY OF HIGHEST CHARGED BATTERY CELLS, WHEREIN NO TWO HIGHEST CHARGED BATTERY CELLS OF THE PLURALITY OF HIGHEST CHARGED BATTERY CELLS ARE ADJACENT, AND WHEREIN EACH HIGHEST CHARGED BATTERY CELL OF THE PLURALITY OF HIGHEST CHARGED BATTERY CELLS IS GREATER THAN THE LEAST CHARGED BATTERY CELL PLUS AN UNBALANCE THRESHOLD

706

ENABLING A DISCHARGE ENABLE SWITCH ASSOCIATED WITH EACH HIGHEST CHARGED BATTERY CELL IN THE PLURALITY OF HIGHEST CHARGED BATTERY CELLS, WHEREIN EACH BATTERY CELL IS ELECTRICALLY COUPLED TO A DISCHARGE CIRCUIT, AND EACH DISCHARGE CIRCUIT COMPRISES: A DISCHARGE ENABLE SWITCH AND A SHARED BALANCING RESISTOR, WHEREIN THE SHARED BALANCING RESISTOR IS ELECTRICALLY CONNECTED TO AN ADJACENT BATTERY CELL

FIG. 7

FIG. 8

990

998  992  994  996

| | | |
|---|---|---|
| 1 | 3873 | 1 |
| 2 | 3872 | 0 |
| 3 | 3877 | 1 |
| 4 | 3873 | 0 |
| 5 | 3863 | 0 |

FIG. 9

FIG. 10

1100 ↘

1102 — RECEIVE AN OPTIMIZATION PARAMETER

1104 — DETERMINE AN OPTIMIZATION VALUE FOR EACH BATTERY CELL IN THE PLURALITY OF BATTERY CELLS BASED ON THE OPTIMIZATION PARAMETER

1106 — IDENTIFY A LEAST CHARGED BATTERY CELL OF THE PLURALITY OF BATTERY CELLS, WHEREIN THE LEAST CHARGED BATTERY CELL EXHIBITS THE LOWEST BATTERY CELL CHARGE OF THE PLURALITY OF BATTERY CELLS

1108 — IDENTIFY A HIGHEST CHARGED BATTERY CELL OF THE PLURALITY OF BATTERY CELLS, WHEREIN THE HIGHEST CHARGED BATTERY CELL EXHIBITS THE HIGHEST BATTERY CELL CHARGE OF THE PLURALITY OF BATTERY CELLS

1110 — SELECT A PLURALITY OF UNBALANCED BATTERY CELLS FROM THE PLURALITY OF BATTERY CELLS BASED ON THE OPTIMIZATION PARAMETER AND THE OPTIMIZATION VALUE FOR EACH OF THE PLURALITY OF BATTERY CELLS, WHEREIN THE PLURALITY OF UNBALANCED BATTERY CELLS DOES NOT COMPRISE THE LEAST CHARGED BATTERY CELL, WHEREIN NO TWO UNBALANCED BATTERY CELLS OF THE PLURALITY OF UNBALANCED BATTERY CELLS ARE ADJACENT, AND WHEREIN THE BATTERY CELL CHARGE OF EACH UNBALANCED BATTERY CELL OF THE PLURALITY OF UNBALANCED BATTERY CELLS IS GREATER THAT THE LEAST CHARGED BATTERY CELL PLUS AN UNBALANCE THESHOLD

1112 — ENABLE THE DISCHARGE ENABLE SWITCH ASSOCIATED WITH EACH UNBALANCED BATTERY CELL IN THE PLURALITY OF UNBALANCED BATTERY CELLS

FIG. 11

1200 →

START

IDENTIFY THE LEAST CHARGED BATTERY CELL, THE HIGHEST CHARGED BATTERY CELL, AND THE BATTERY CELLS ADJACENT TO THE HIGHEST CHARGED BATTERY CELL —1202

IDENTIFY UNBALANCED BATTERY CELLS —1204

FOR ALL POSSIBLE COMBINATIONS OF SELECTED BATTERY CELLS —1206

ALL COMBINATIONS CONSIDERED

NEXT COMBINATION

SET CURRENT COMBINATION AS BEST COMBINATION —1216

COMPLIANCE WITH ADJACENCY RULES? 1208 NO

BEST COMBINATION? 1214 NO

YES

COMMENCE CELL BALANCING OPERATION ACCORDING TO THE BEST COMBINATION 1218

YES

COMPLIANCE WITH BALANCED AND UNBALANCED REQUIREMENTS? 1210 NO

CALCULATE THE OPTIMAL VALUE FOR THE COMBINATION? 1212

END

YES

FIG. 12

FIG. 13

Europäisches
Patentamt

European
Patent Office

Office européen
des brevets

# EUROPEAN SEARCH REPORT

**Application Number**

EP 25 17 2127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 674 432 A (UNITED AUTOMOTIVE ELECT SYS CO) 1 September 2023 (2023-09-01) * paragraphs [0014], [0048], [0067], [0082], [0084], [0085], [0099] - [0104], [0121]; claims 1,2; figures 2,3,4 * | 1-17 | INV. H02J7/00  ADD. H01M10/42 |

-----

**TECHNICAL FIELDS SEARCHED (IPC)**

H02J
B60L
H01M

The present search report has been drawn up for all claims

| Place of search | Date of completion of the search | Examiner |
|---|---|---|
| Munich | 26 September 2025 | Varela Fraile, Pablo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 2127

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | Publication date | Patent family member(s) | Publication date |
|---|---|---|---|
| CN 116674432 A | 01-09-2023 | NONE | |